# EUROPÄISCHE PATENTANMELDUNG

(11) **EP 2 345 499 A1**
(43) Veröffentlichungstag der Anmeldung: **20.07.2011**
(21) Anmeldenummer: 10000314.4
(22) Anmeldetag: 14.01.2010
(51) Int. Cl.: B23H 9/00, B23H 9/10, B23H 9/14

(54) **Funkenerosive Bearbeitung nach Beschichtung mit Hilfselektrode im Bauteil während Beschichtung**

(71) Anmelder: SIEMENS AKTIENGESELLSCHAFT, 80333 München (DE)
(72) Erfinder: Klein, Karsten Dr., 14089 Berlin (DE); Maiz, Khaled Dr., 13355 Berlin (DE); Thomaidis, Dimitrios, 10367 Berlin (DE)

(57) **Zusammenfassung**

Mittels des neuen Verfahrens und der entsprechenden Vorrichtung können Bauteile mit nichtelektrisch leitfähigen keramischen Schichten funkenerosiv bearbeitet werden, weil eine Hilfselektrode im Bauteil vor dem zu beschichtenden Bauteil angeordnet wird.

## Beschreibung

Die Erfindung betrifft ein Verfahren und eine Vorrichtung zur funkenerosiven Bearbeitung eines Bauteils.

Während der Wiederaufarbeitung betriebsbeanspruchter Turbinenschaufeln werden die Kühlluftbohrungen zum Teil von den neu aufgebrachten metallischen Haftvermittlungs- bzw. keramischen Wärmedämmschichten verschlossen. Die Rekonstruktion der Lage der Bohrachse ist eine wichtige Messgröße zum anschlie-βenden Wiederöffnen der Kühlbohrungen. Der Einsatz von funkenerosiven Verfahren bei der Fertigung von z.B. Bohrungen setzt eine elektrische Mindestleitfähigkeit von ca. 0,2 Sm des zu bearbeitenden Werkstoffes voraus. Bedingt durch elektrisch nicht leitenden Wärmedämmschichten können beschichtete Bauteile nicht konventionell funkenerosiv bearbeitet werden.

Es ist daher Aufgabe der Erfindung oben genanntes Problem zu lösen.

Die Aufgabe wird gelöst durch ein Verfahren gemäß Anspruch 1 und einer Vorrichtung gemäß Anspruch 7.

In den Unteransprüchen sind weitere vorteilhafte Maßnahmen aufgelistet, die beliebig miteinander kombiniert werden können, um weitere Vorteile zu erzielen.

Gegenstand der Erfindung ist das funkenerosive Bearbeiten von zumindest einer nicht elektrisch leitfähigen keramischen Schicht, welche auf ein metallisches Bauteil angebracht ist.

Vorzugsweise wird das Verfahren zur Rekonstruktion der Achslage von Kühlluftbohrungen durchgeführt. Hierzu wird, bevor das Wiederbeschichten durchgeführt wird, eine Hilfselektrode in das Loch eingesteckt. Nach der Beschichtung erfolgt die funkenerosive Bearbeitung. Die Entladungen zünden zunächst zwischen der Werkzeugelektrode und der Hilfselektrode. Dabei wird durch Sekundäreffekte eine elektrisch leitende Schicht auf die keramische Schicht abgeschieden. Hierdurch wird ein Funkenüberschlag zwischen Werkzeugelektrode und beschichteter Keramik ermöglicht. Während der Entladung wird durch deren Plasmakanalfluß auf der beschichteten Keramik ein thermisches Abtragen realisiert. Somit ist es erreichbar, die Werkzeugelektrodengeometrie in der keramischen Schicht funkenerosiv abzubilden.

Durch die geschilderten Merkmale wird das Wiederöffnen der Kühlluftbohrungen ermöglicht und zusätzlich die nicht leitende Wärmedämmschicht funkenerosiv bearbeitet. Dabei können komplizierte geometrische Strukturen (z.B. Diffusoren) in diese Schicht eingebracht werden. Im Gegensatz zu anderen funkenerosiven Verfahren ist hierbei keine elektrisch leitfähige Startschicht erforderlich. Die Lage der Bohrachsen wird durch die Hilfselektroden optimal definiert und rekonstruiert. Das vorgestellte Verfahren ermöglicht eine Bearbeitung an Stellen, die für andere Bearbeitungsverfahren (z.B. Laserverfahren) nicht zugänglich sind.

Es zeigen
- Figuren 1,2,3,4: schematisch den Ablauf des erfindungsgemäßen Verfahrens;
- Figur 5: eine Gasturbine;
- Figur 6: eine Turbinenschaufel;
- Figur 7: eine Brennkammer;

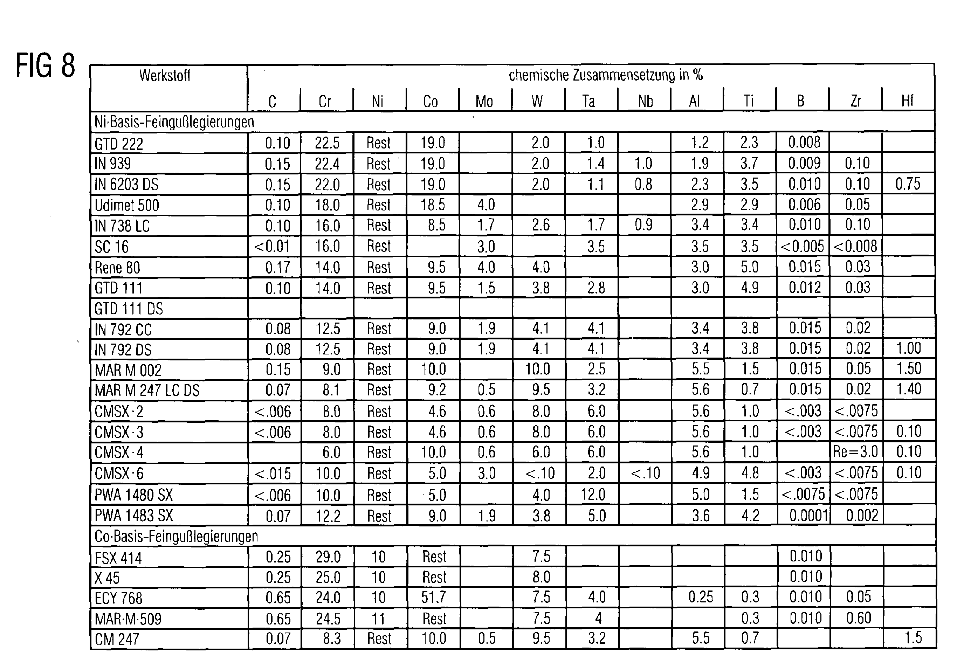

- Figur 8: eine Liste von Superlegierungen.

Die Beschreibung und Figuren stellen nur Ausführungsbeispiele der Erfindung dar.

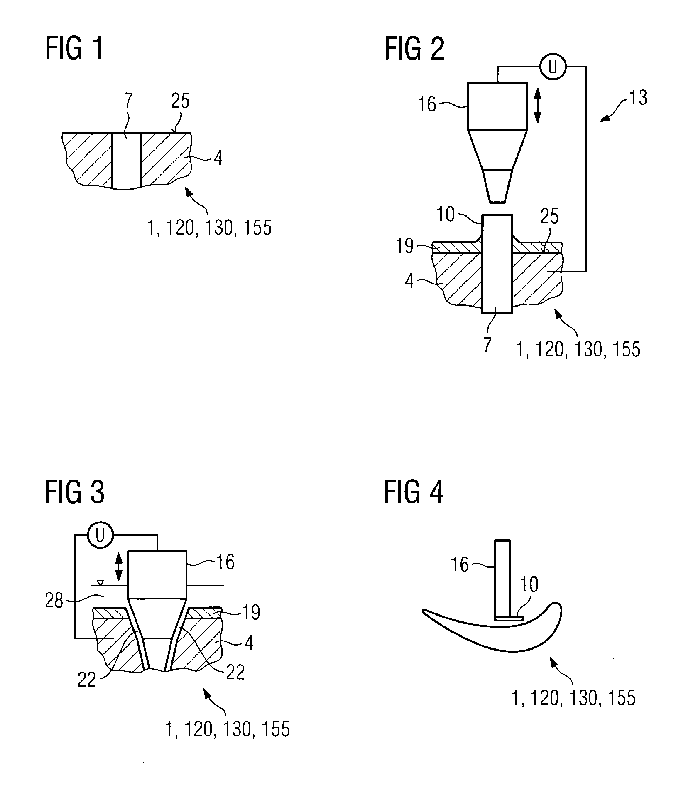

In Figur 1 ist ein beispielhaftes Bauteil 1, 120 130, 155 gezeigt.

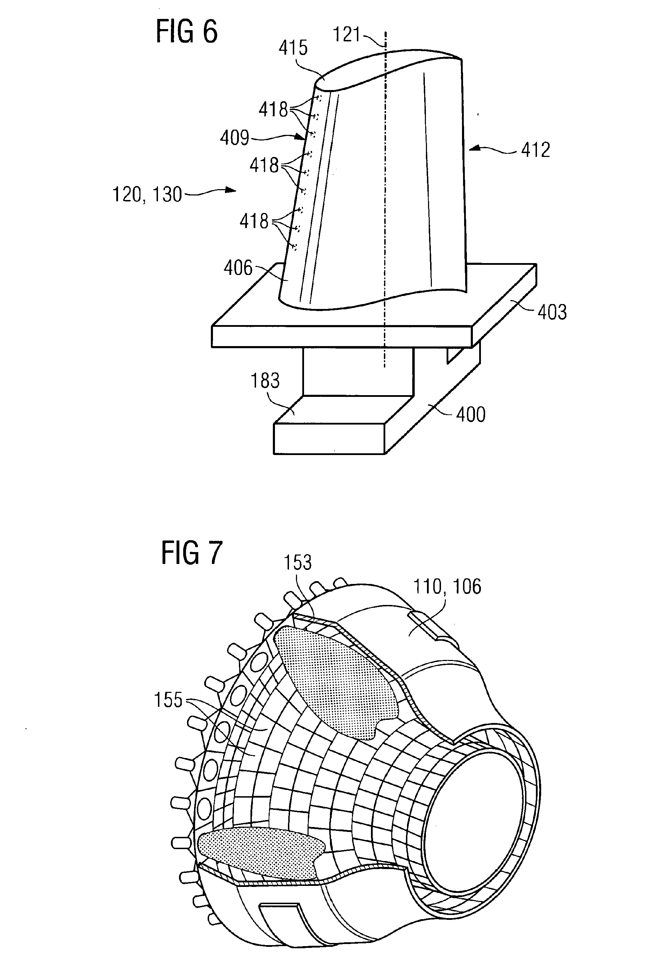

Das Bauteil 1, 120, 130, 155 weist ein Substrat 4 auf, in dem ein offenes Loch 7, vorzugsweise ein Durchgangsloch vorhanden ist. Das Loch 7 weist nach einer Bearbeitung vorzugsweise im Endzustand einen inneren zylindrischen Anteil und einen äußeren, im Querschnitt vergrößerten Anteil (Diffusor 22 Fig. 3) auf.
Insbesondere bei Turbinenschaufeln 120, 130 weist das Substrat 4 eine Superlegierung gemäß Figur 7 auf.
Das Bauteil 1, 120, 130, 155 ist an der Oberfläche 25 noch unbeschichtet, soll aber beschichtet werden und vorzugsweise nachträglich soll das Loch 7 noch verändert werden. Ebenso kann ein Sackloch nur verlängert werden oder das Loch wird durch die Hilfselektrode 8 nur freigehalten und durch das EDM-Verfahren nur entfernt.
Daher wird vor dem Beschichten eine Hilfselektrode 10 in das Loch 7 eingesetzt.
Dann wird beschichtet. Die Hilfselektrode 10 ragt dabei vorzugsweise über die Oberfläche 25 hervor, so kann sie bei der funkenerosiven Bearbeitung gut kontaktiert werden.

Die Hilfselektrode 10 und/oder die Werkzeugelektrode 16 sind vorzugsweise metallisch oder graphitisch.

In Figur 2 ist das mit der Hilfselektrode 8 beschichtete Bauteil 1, 120, 130, 155 zu sehen.
Auf einer Oberfläche 25 des Substrats 4 ist jetzt zumindest eine Beschichtung 19, vorzugsweise zumindest eine keramische Beschichtung 19 vorhanden. Dies sind vorzugsweise eine metallische Haftvermittlerschicht und eine keramische Schicht. Beide Schichten (metallisch, keramisch) können auch Duplex Strukturen aufweisen. Dies ist vorzugsweise eine innere keramische Schicht auf Zirkonoxidbasis und eine äußere keramische Schicht auf Pyrochlorbasis.

Vorzugsweise ist dies nur eine keramische Schicht 19. Es können aber auch mehrere keramische Schichten oder Vielfachschichtsysteme mit keramischen Schichten sein.

Vorzugsweise ragt auch hier die Hilfselektrode über die Beschichtung 19 zur späteren besseren Zugänglichkeit hinaus. Jetzt kann die funkerosive Bearbeitung mit der Hilfselektrode 10 erfolgen. Vorzugsweise mittels einer Werkzeugelektrode 16 zur funkenerosiven Bearbeitung und einer entsprechender Spannungsquelle 13 wird das Bauteil 1, 120, 130, 155 bearbeitet.

In Figur 3 ist der Abschluss des Verfahrens gezeigt.
Die Werkzeugelektrode 16 hat eine bestimmte Form, die im Querschnitt vorzugsweise von der Form der Hilfselektrode 10 abweicht. Die Werkzeugelektrode 16 ist vorzugsweise entsprechend der herzustellenden Form eines Diffusors 22 eines Kühlluftlochs einer Turbinenschaufel ausgeformt, jedenfalls verbreitert sie sich im Querschnitt.

Vorzugsweise wird das Bauteil 1, 120, 130, 155 mit der Hilfselektrode 10 und der Werkzeugelektrode 16 in einem Elektrolyt angeordnet, bei dem vorzugsweise durch thermisches Cracken Kohlenstoff sich als elektrisch leitende Schicht auf der Innenseite der Beschichtung 19 absetzt und somit eine funkenerosive Bearbeitung ermöglicht.

Figur 4 zeigt eine Anordnung von Hilfselektrode 10 und Werkzeugelektrode 16, deren Längsrichtungen nicht parallel zueinander verlaufen, sondern nahezu senkrecht.
Eine Verlängerung der Längsebene des Lochs 7 würde eine Hinterkante des Bauteils 1, 120, 130, 155 schneiden. Solche Stellen sind daher mittels Laser nicht zu bearbeiten aber mit dem erfindungsgemäßen Verfahren.

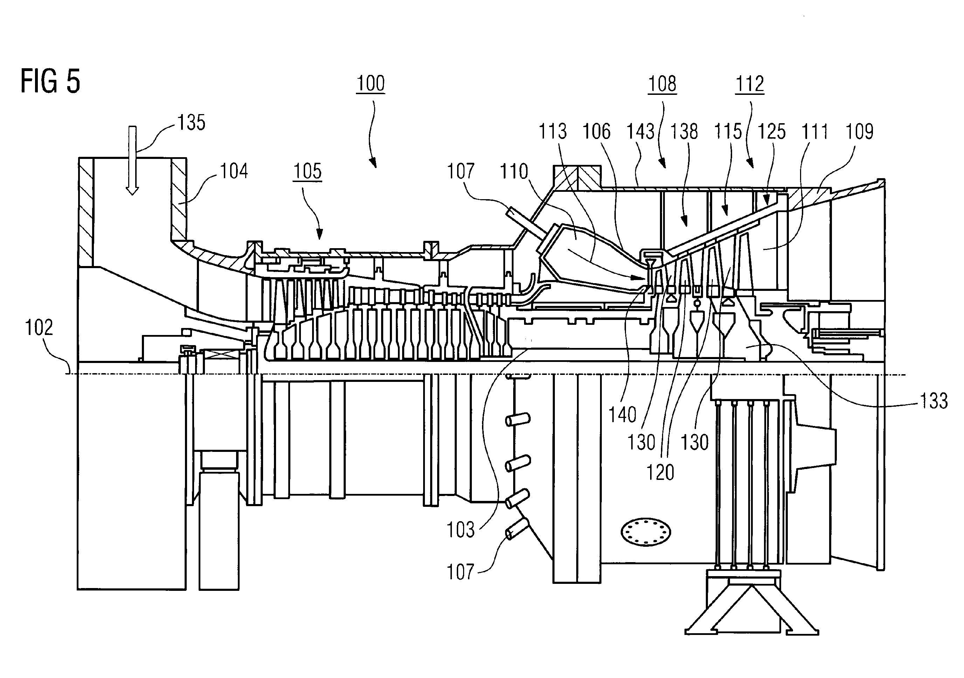

Die Figur 5 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrA1X; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrA1X kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Die Figur 6 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt) .

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrA1X; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.
Die Dichte liegt vorzugsweise bei 95% der theoretischen Dichte.
Auf der MCrA1X-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8A1-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11A1-0,4Y-2Re oder Ni-25Co-17Cr-10A1-0,4Y-1,5Re.

Auf der MCrAlX kann noch eine Wärmedämmschicht vorhanden sein, die vorzugsweise die äußerste Schicht ist, und besteht beispielsweise aus Zr0₂, Y₂0₃-Zr0₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 7 zeigt eine Brennkammer 110 einer Gasturbine.
Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 aus einer Legierung ist arbeitsmediumsseitig mit einer besonders hitzebeständigen Schutzschicht (MCrA1X-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrA1X: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrA1X kann noch eine beispielsweise keramische Wärmedämmschicht vorhanden sein und besteht beispielsweise aus Zr0₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

## Patentansprüche

1. Verfahren zur funkenerosiven Bearbeitung eines zu beschichtenden Bauteils (1, 120, 130, 155) mit einem Loch (7),
**dadurch gekennzeichnet, dass**
in das Loch (7) vor der Beschichtung eine Hilfselektrode (10) eingebracht wird,
dann das Bauteil (1, 120, 130, 155) mit Hilfselektrode (10) beschichtet wird und
nach der Beschichtung mittels der Hilfselektrode (10) eine funkenerosive Bearbeitung des Bauteils (1, 120, 130, 155) stattfindet.

2. Verfahren nach Anspruch 1,
bei dem eine Werkzeugelektrode (16) zur weiteren Verarbeitung benutzt wird,
die mit der Hilfselektrode (10) elektrisch leitend in Verbindung gebracht wird.

3. Verfahren nach Anspruch 2,
bei dem die Werkzeugelektrode (16) im Querschnitt eine andere Form als die Hilfselektrode (8) aufweist, insbesondere einen größeren Querschnitt aufweist.

4. Verfahren nach Anspruch 1, 2 oder 3,
bei dem die Hilfselektrode (10) aus dem Loch (7) herausragt,
insbesondere auch über die Beschichtung (19) nach der Beschichtung.

5. Verfahren nach Anspruch 1, 2, 3 oder 4,
bei dem das Bauteil (1, 120, 130, 155) in einem Dielektrikum während der funkenerosiven Bearbeitung angeordnet ist.

6. Verfahren nach Anspruch 1, 2, 3, 4 oder 5,
bei der die Schicht (19) zumindest eine keramische Schicht ist,
insbesondere nur eine keramische Schicht aufweist.

7. Vorrichtung,
insbesondere zur Durchführung des Verfahrens nach Anspruch 1, 2, 3, 4, 5 oder 6,
die aufweist:
eine Hilfselektrode (16),
die im Loch (7) des Bauteils (120, 130, 155) einsetzbar ist,
eine Spannungsquelle,
die die Hilfselektrode (16) mit einem Bauteil (1, 120, 130, 155) verbindet,
eine Aufnahme für das Bauteil (1, 120, 130, 155).

8. Vorrichtung nach Anspruch 7,
bei dem die Hilfselektrode (10) aus dem Loch (7) herausragt.

9. Vorrichtung nach Anspruch 7 oder 8,
die eine Werkzeugelektrode (16) aufweist,
die mit der Hilfselektrode (10) verbunden werden kann.

10. Vorrichtung nach Anspruch 7, 8 oder 9,
die eine Aufnahme für ein Dielektrikum und ein Dielektrikum aufweist.

11. Vorrichtung nach Anspruch 7, 8, 9 oder 10,
bei dem die Werkzeugelektrode (16) im Querschnitt eine andere Form als die Hilfselektrode (8) aufweist,
die insbesondere im Querschnitt vergrößert ist.

12. Verfahren oder Vorrichtung nach Anspruch 1, 2, 3, 4, 5, 6 7, 8, 9 ,10 oder 11,
bei der die Hilfselektrode (10) metallisch ist.

13. Verfahren oder Vorrichtung nach Anspruch 2, 3, 4, 5, 6, 9, 10, 11 oder 12,
bei der die Werkzeugelektrode (16) metallisch ist.

14. Verfahren oder Vorrichtung nach Anspruch 1, 2, 3, 4, 5, 6, 7, 8, 9, 10, 11 oder 13,
bei dem die Hilfselektrode (10) graphitisch ist.

15. Verfahren oder Vorrichtung nach Anspruch 2, 3, 4, 5, 6, 9, 10, 11, 12 oder 14,
bei dem die Werkzeugelektrode (16) graphitisch ist.
